# EUROPEAN PATENT APPLICATION

(11) **EP 4 738 183 A1**
(43) Date of publication of application: **06.05.2026**
(21) Application number: 24465589.0
(22) Date of filing: 04.11.2024
(51) Int. Cl.: G06F 40/35, G06F 40/56, G06F 40/30, G06F 40/211, G06F 40/44

(54) **LANGUAGE MODEL SAFETY CONTROL METHOD**

(71) Applicant: Vodafone Group Services Limited, Newbury RG14 2FN (GB)
(72) Inventor: CIUREA, Marius, London, W2 6BY (GB); ARUMUGAM, Chandran, London, W2 6BY (GB); MEY, Oliver, London, W2 6BY (GB); KILMURRAY, Richard, London, W2 6BY (GB)
(74) Representative: Boult Wade Tennant LLP

(57) **Abstract**

Computer implemented method for preventing unsafe responses of a first language model, comprising: receiving, by a protection model, an input prompt, the input prompt comprising a prompt directed to the first language model, classifying, by the protection model, the input prompt into an evaluation class based on the input prompt and training data, wherein evaluation classes comprise at least a violate class and a permit class and the training data comprising reference prompts of the violate class, wherein inputting the reference prompts of the violate class into the first language model would result in output of responses that violate the use policy by the first language model, preventing input of the input prompt into the first language model when the evaluation class is the violate class to prevent outputting of unsafe responses by the first language model, characterized in that the training data comprise at least one reference prompt that when input into the first language model generates a response that violates a use policy of the first language model, wherein the use policy comprises rules that define how the first language model is not to be used.

## Description

### TECHNICAL FIELD

This disclosure relates to methods for preventing unsafe responses by classifying input prompts.

### BACKGROUND

Recent applications of large language models, (L)LMs, have shown potential risks, including the generation of misleading information or harmful content as unfiltered output data. Instances of mischief or misuse involve LLMs being used to create fake news, impersonate individuals, or generate offensive material. Multimodal LLMs, which can use text, images, video, audio or any other data or combination of those as input data as well as generate it as unfiltered output data, could even be used to generate fake pictures, videos or sounds, which could also be misused. To mitigate these issues, providers implement safeguards such as filtering mechanisms that detect and block inappropriate prompts, monitoring systems for misuse detection, and content moderation policies. Additionally, some LLM platforms incorporate user feedback loops to refine their models' outputs continually. Providers also work closely with policymakers and researchers to develop industry-wide standards and best practices that ensure responsible use of these powerful tools while balancing the benefits they offer for innovation and progress in various domains.

Traian Rebedea, et al: "NeMo Guardrails: A Toolkit for Controllable and Safe LLM Applications with Programmable Rails" describes a toolkit in which responses are filtered using Guardrails throughout this application, as a post processing layer. After the LLM generates a response, the Guardrails evaluate the output data against predefined rules and guidelines to determine if it adheres to acceptable conversation boundaries. If the output violates any rules, it can be modified, blocked, or redirected. This ensures that even if the LLM generates inappropriate or harmful content, it is intercepted and adjusted before reaching the user.

### SUMMARY OF INVENTION

Even though various ideas to prevent misuse of first language models are already used to improve safety of use of first language models, there is still an issue with the usage of these tools in that prompts in which a guardrail cannot identify any misuse might still end up being processed by the first language model and in turn generate a response that constitutes misuse. In turn, a guardrail that also analyses the response would need to be in place and catch those inappropriate outputs. However, this extra layer, that post processes the responses introduces a delay, because the response can only be output to a user after the guardrail checked compliance with the use policy, therefore such a post processing guardrail deteriorates user experience, as the responses cannot be output to the user in a streamed mode. Furthermore, as first language model processing is quite resource and bandwidth intense, the post processing of the responses will result in preventing output of the responses that are classified as unsafe and therefore, the resources used for generating the responses classified as unsafe are wasted.

The object of the present invention is to provide a method that increases a user experience of a first language model while still maintaining high safety, fast response times and still reduces resource usage.

In one aspect, a computer implemented method for preventing unsafe responses of a first language model, comprising:
- receiving, by a protection model, an input prompt, the input prompt comprising a prompt directed to the first language model,
- classifying, by the protection model, the input prompt into evaluation classes based on the input prompt and training data, wherein the evaluation classes comprise at least a violate class and a permit class and the training data comprising reference prompts of the violate class, inputting the reference prompts the violate class into the first language model resulting in output of unsafe responses by the first language model,
- preventing input of the input prompt into the first language model when the evaluation class is the violate class to prevent outputting of unsafe responses by the first language model, characterized in that the training data comprises at least one reference prompt that when input into the first language model generates a response that violates a use policy of the first language model and thus constitutes an unsafe response, wherein particularly the use policy comprises rules that define how the first language model is not to be used.

"Unsafe response" refers to a response that violates at least one use policy.

"First language model" refers to a trained model that was trained for processing input prompts. The first language model may be a large first language model, LLM, a small first language model or a multimodal LLM.

"Language model" refers to a trained model, specifically a trained machine learning model, that was trained for processing input prompts, the processing of the language model often comprising natural language processing. The language model may be a large language model, LLM, a small language model or a multimodal LLM.

"Protection model" refers to a machine learning model that is configured or trained to protect a language model from a jailbreak.

"Machine learning model" refers to a processing or mapping of input data into output data, wherein opposed to classical algorithmic processing, during a learning phase, the machine learning model learns the processing using training data, after the learning phase the learned processing is applied to new input data. The processing may be any kind of processing such as solving a classification problem or a regression problem, but also more complex task such as natural language processing, image to image processing and the like.

"Input data" refers to data that is input into a model for processing, particularly into a protection model.

"Output data" refers to an output of a model in general. The format and content of the output data depends on the kind of model that is used for outputting the output data.

"Prompt" refers to input data of a language model. Depending on the language model used, the input data may be a text prompt, but also may comprise pictures or sounds, depending on the respective language model used, the prompt contains instructions directed to the language model to perform a task. The task may be a general question that the language model should answer, it may be a dedicated task such as a calculation or any other processing of some sort, the prompt may further contain input data, which can be data from measurements, but may also be image files, videos are the like.

In the following, an "input prompt" specifically refers to a prompt received for input into the first language model, specifically during inference, and that is to be classified by a protection model into one of the evaluation classes to find out whether a response generated by the first language model in response to inputting the input prompt satisfies the use policy of the first language model.

"Evaluation class" refers to a class of the input prompt determined by the protection model. The evaluation classes include at least one permit class and at least on violate class.

In the following a "reference prompt" refers to a prompt that has a known evaluation class and that is used as a reference when classifying input prompts using the protection model or as training data during training of the protection model. The reference prompts are provided with annotations, particularly with corresponding evaluation classes.

"Annotation" refers to a tag or metadata provided together with input data, specifically reference prompts, wherein the annotation is used during a learning or training phase of a machine learning model, e.g. the protection model, to adapt the output of the respective machine learning model to learn desired patterns or relationships in the respective input data. Specifically, when the machine learning model is the protection model, the annotations of the reference prompts correspond to the respective evaluation classes of the respective reference prompts.

When a protection model is trained using a supervised learning algorithm, the combination of input data together with annotations is called training data or annotated training data.

"Training data" refers to any kind of data that is used during learning or training phases of machine learning models.

"Permit classes" refer to classes of the evaluation classes that do not violate the use policy of the first language model but that are in accordance with the use policy of the first language model.

"Violate classes" refer to classes of the evaluation classes that violate the use policy of the first language model and accordingly, an output generated by the first language model in response to inputting the user prompt classified as belonging to the violate class would in turn result in a response that violates the use policy of the first language model.

"Response" in the following refers to output data of a language model, e.g. a first language model, that is generated in response to inputting input data, i.e. a prompt, e.g. an input prompt or a reference prompt, into the language model.

"Use policy" refers to list or collection of rules that define what kind of output data a language model is allowed to provide, what kind of language to use when generating the responses, what kind of questions, provided in the input prompts, are allowed to be answered by the language model. Often, such use policies are implemented during training of the language model, however, in specialized applications of language models pretrained language models may be used and adapted to the specialized application that may require further rules in the use policy than were used during a training phase to ensure that the language model is used safely also in the specialized application. Accordingly, in addition to rules of the use policy used during a training phase, in the following the use policy used during inference may comprise further rules so that the safety of use of a language model in general can also be ensured in specialized applications, according to embodiments of this invention this further rules may be supervised by the protection model, which further increases the safety of the usage of the so first language model.

While in the prior art, either an input prompt is determined to be violating a use policy of a language model or the response is determined to be violating the use policy of the language model, the inventors of the pending application observed that there are input prompts that result in responses that violate a use policy of the language model even though the input prompt does not violate the use policy. Accordingly, the inventors suggest that the input prompts are classified by a protection model such that input prompts that would result in responses that would violate the use policy of the so first language model are prevented from being input into the first language model to thus improve safety during use of the first language model. Furthermore, the method achieves saving of resources, as the input prompts, even though the input prompts do not violate the use policy, are not processed by the first language model, wherein by contrast, the prior art suggests determining a violation of the use policy after generation of the response by the language model. Furthermore, because the response does not need to be analyzed to determine whether it violates the use policy, the claimed method furthermore achieves that processing of input prompts that would not result in a violation of the use policy are output fast and without any delay by a further analysis by any kind out output guard and the output of the first language model is thus sped up compared to the prior art.

Preferably, there are a plurality of violate classes and the training data comprise at least one reference prompt for each of the violate classes.

The use policy may define, using a plurality of rules, what kind of prompts or response constitute jailbreaks of the use policy. Accordingly, one or a plurality of violate classes may be identified that respectively correspond to one or a plurality of the rules of the use policy. By using a plurality of violate clases, the method is thus rendered more flexible and may thus be adapted easily in that a certain class may be a violate class in one use scenario, while the same classification in another use scenario may be an allowed response and thus be of the permit class. Accordingly, by using different violate classes input prompts may be classified according to a use case of the respective first language model and by using the plurality of violate classes the method is rendered more flexible.

Preferably, the classifying the input prompt includes embedding the input prompt and the reference prompts to generate an embedded input prompt and embedded reference prompts, determining a nearest neighbor of the embedded input prompt among the embedded reference prompts, and when the nearest neighbor is an embedded prompt of the violate class and a distance between the nearest neighbor and the embedded input prompt is smaller than a threshold distance, the evaluation class is the violate class, specifically one of the violate classes, i.e. the violate class of the nearest neighbor.

The inventors of this applications observed that input prompts that are suitably embedded into an embedding space will be in close proximity, in the embedding space, to reference prompts embedded in the embedding space by the same embedding algorithm. Therefore, the inventors suggest embedding the input prompts and suitably determining proximity to the reference prompts and from the proximity determine whether the input prompts would also result in responses that violate the use policy of the first language model. Accordingly, the pending application provides a method that allows using an embedding to determine whether an input prompt violates the use policy and accordingly, allows for easy identification of jailbreak input prompts without the need to analyse a response and thus saves resources when protecting a language model from jailbreaking.

Preferably, the determining a nearest neighbor includes grouping the embedded reference prompts into one or more violate classes, determining an average embedding value for the embedded reference prompts of each violate class and determining the nearest neighbor based on the determined average embedding values.

By averaging over a couple of embeddings of reference prompts into an embedding space, determining of the violate class can be further improved and a violate class of the respective input prompt can be determined more accurately.

Preferably, the training data further comprise reference prompts that when input into the first language model generate a response that is in line with the use policy of the first language model and thus are classified as reference prompts of the permit class and when the nearest neighbor of the embedded input prompt is an embedded reference prompt of the permit class or when a nearest neighbor is a reference prompt of the violate class and the distance to the nearest neighbor is larger than the threshold distance, the evaluation class is the permit class and the method further comprising inputting the input prompt into the first language model when the evaluation class is the permit class.

To be sure that an input prompt is in accordance with the use policy of the first language model, we could furthermore introduce one or a plurality of permit classes into which the input prompts may be classified. Accordingly, when the evaluation class is one of the permit classes, we can be sure that input prompt satisfies the use policy and in turn input the respective input prompt into the first language model. As the input prompt is again classified based on a comparison with embedded reference prompts of the permit class, security is furthermore increased.

Preferably, the determining a nearest neighbor comprises at least one of: performing a principal component analysis, performing an approximate nearest neighbor search, performing a cluster analysis, performing a singular value decomposition, and performing a hierarchical navigable small world analysis, and the determining a distance between the nearest neighbor and the input prompt comprises at least one of: applying a cosine distance metric, applying a Euclidian distance metric, applying an L2 distance.

Different kinds of pre-processing may be applied to the input prompt or the embedded input prompt so that processing of the determining of the nearest neighbor requires fewer compute resources.

Preferably, the embedding the input prompt comprises at least one of embedding the input prompt using at least any one of: a TF-IDF vectorization, a word embedding, a sentence embedding, a first language model-based sentence embedding, or a multimodal embedding.

The inventors observed that one could use of the shelf models for processing the embeddings, respectively depending on the input data to be processed, a suitably embedding may be computed from the input prompt and the input prompt is in turn suitably embedded. Accordingly, any model used for processing the embedding does not need to be trained and accordingly, the overall processing needs for training and inference is rather limited and accordingly, the pending application provides a resource efficient algorithm to guarantee safe use of the so first language model.

According to another aspect, the pending application provides a protection model for use in the above method for providing a first language model, wherein the protection model is configured to receive input data and generate output data, wherein the input data is the input prompt directed to the first language model and the output data corresponds to the evaluation class determined by the protection model.

The protection model according to an aspect of the invention ensures that input prompts that violates the use policy are reliably identified and in turn it can be prevented that the input prompts of the violate classes are input in the so first language model.

Preferably, the protection model either comprises an embedding module to compute the embedding, and a mapping executed by the protection model is an end-to-end mapping and the protection model is configured to take prompts as input data and output the evaluation class as the output data; or the protection model is a combination of the embedding module and a nearest neighbor module, so that the protection model performs the classifying in stepped manner, the embedding module is configured to receive the input prompts and reference prompts as input data, embed the received prompts and output embedded prompts as output data, and the nearest neighbor module configured to compute the evaluation class from the embedded input prompts and the embedded reference prompts by determining the neareast neighbor.

When the protection model is configured to execute the end-to-end mapping, it can be trained to directly compute the evaluation class and in turn, the computation can be easily performed in a one-stepped manner, which is efficiently done on specialized compute units such as graphics cards and the like. When the protection model is a combination of the embedding module and the nearest neighbor module, training is only needed in that the reference prompts of the training data are suitably embedded so that the nearest neighbor module can determine the respective evaluation class from the nearest neighbor. Accordingly, in the latter, training is less resource consuming, but inference may be more resource consuming, in the former case, the training is more resource consuming, but inference is more efficient.

Preferably, the embedding module includes at least one of a TF-IDF vectorization, a word embedding, a sentence embedding, a first language model-based sentence embedding, a multimodal embedding.

Another aspect relates to a computer implemented method for training the protection model, the method including receiving training data as input data, where the training data is based on the reference prompts and includes, for each reference prompt, a corresponding annotation that indicate the evaluation class of the respective reference prompt, optimizing the protection model to output a result in accordance with the annotation.

Preferably, when the protection model is configured to execute the end-to-end mapping, the training data comprises the reference prompts and when the protection model and the embedding module form the protection model in a stepped manner, the training data may comprise embedded reference prompts output by the embedding module as input data for the nearest neighbor module or the training data comprises the reference prompts and the reference prompts need to be processed by the embedding module before training the nearest neighbor module.

The training method enables training of the protection model either implemented as the end-to-end mapping or the stepped mapping and is therefore highly flexible with respect to training the protection model. When the training data comprises the reference prompts any suitable embedding may be used during training and inference, as long as the same embeddings are used in both. However, when the training data comprises the embedded reference prompts, the embedding used to embed the reference prompts also needs to be used during inference. Accordingly, when providing the reference prompts with annotations, training requires more resources, however, is in turn more flexible with respect to the embedding used and accordingly, when reference prompts are available, a new embedding can be easily implemented. By contrast, when directly providing the embedded reference prompts, the embedded reference prompts of a same evaluation class only need to be grouped suitably, so that a center can be determined for determining a nearest neighbor and therefore training is more resource efficient.

Another aspect according to the invention provides a method for generating training data for a protection model, particular for use in the above training method, comprising:
- selecting a number of reference prompts as training data for the protection model for a plurality of the evaluation classes, wherein a response output by the first language model in response to inputting the reference prompts gives a result in accordance with the evaluation class, so that responses output by the first language model based on the reference prompts annotated as belonging to a violate class violate a use policy of the first language model and responses output by the first language model based on reference prompts annotated as belonging to the permit class are in-line with the use policy of the first language model and the selecting a number of reference prompts is performed such that the training data comprises at least one reference prompt for each of the violate classes.

Determining training data is required so that a machine learning model can be trained. According to the above method, prompts that correspond to responses that jailbreak the first language model are selected as reference prompts for the training data, so that the selected reference prompts can be used during training of the protection model. Accordingly, the method provides training data that can be used to suitably train the protection model and thus render the use of a language model more secure.

Preferably, in the above method for generating training data the selecting a number of reference prompts comprises:
- running the first language model in a test mode, wherein input prompts directly input into the first language model,
- receiving, by the first language model, input prompts,
- classifying, using a classifier, the responses as at least one of the violate class and the permit class,
- selecting the input prompts corresponding to responses classified as the violate class as the reference prompts of the violate class and selecting the input prompts corresponding to responses classified as the permit class as reference prompts of the permit class, and
- collecting the selected input prompts as basis for the training data.

By using a test mode, input prompts of the violate class can be collected using a classifier, such as a guard system that classifies input prompts and responses suitably. Accordingly, when during a test mode enough training data was collected, e.g. by letting test users use the first language model in a close to production environment, the rather resource intense guard system can be turned of and the protection model can be trained and in turn used to provide protection for the first language model. Put in different words, by training the protection model, a protected first language model may be provided that encompasses the protection model and the first language model.

Preferably, in the above method for generating training data the selecting a number of reference prompts comprises: generating, using an attack model, attack prompts for the first language model; processing, by the first language model, the attack prompts; generating, by a judging model, a judgement result based on the response and the use policy that can be used to determined the evaluation classes; and when the evaluation class is not one of the violate classes: iteratively refining the attack prompt based on the judgement result.

Here and in the following the term "attack model" refers to a model that is used to generate input prompts using an adverserial attack strategy.

An "adverserial attack" refers to strategic methods employed to critically examine and improve the robustness of LLM systems. This involves intentionally designing scenarios, i.e. prompts, that test the effectiveness of defensive measures implemented within these models while seeking to identify potential vulnerabilities.

Such adverserial attacks may include a range of techniques, such as crafting adversarial examples of prompts or input prompt manipulations aimed at circumventing the language model's guards (i.e. intrinsic security mechanisms). The primary purpose is not to compromise the integrity of these models but rather to strengthen their resilience and overall performance.

More details on adverserial attacks can e.g. be found in: "Adversarial Examples for Natural Language Processing" by Regina Barzilay, et al., published in Proceedings of the 2017 Conference on Empirical Methods in Natural Language Processing (EMNLP), "A Survey of Adversarial Attacks and Defenses in Natural Language Processing" by Aman Hammer, et al., presented at the International Conference on Learning Representations (ICLR) 2 vol. 1 (2019), "Adversarial Machine Learning for NLP: An Overview of Approaches and Challenges" by Rémi Munos, published in the Journal of Artificial Intelligence Research (JAIR) in 2020, "Generating Adversarial Examples for Natural Language Processing Systems Using Deep Learning" by Yinzhi Chen, et al., presented at the International Conference on Machine Learning (ICML) in 2016. These publications offer valuable insights into the current state of research and development surrounding adverserial attacks against language models and their associated guards. In "Jailbreaking Black Box Large Language Models in Twenty Queries", arXiv:2310.08419, Patrick Chao et.al. describe a method called Prompt Automatic Iterative Refinement (PAIR), in which an attack model generates an attack prompt directed to a target model and a judging model evaluates whether or not the attack prompt jailbreaks the target model. According to a score produced by the judging model, the attack prompt is iteratively refined until an attack prompt jailbreaking the target model is found.

A recent publication *"*AutoDAN-Turbo: A Lifelong Agent for Strategy Self-Exploration to Jailbreak LLMs" by Xiaogeng Liu (https://arxiv.org/search/cs?searchtype=author&query=Liu,+X) et. AI. introduces AutoDAN-Turbo, a novel agent designed for discovering jailbreak strategies that bypass restrictions in large language models without human guidance. AutoDAN-Turbo autonomously generates a variety of jailbreak tactics to exploit LLMs for red-teaming tasks, achieving high success rates on benchmarks, particularly with GPT-4. Moreover, it allows integration of existing human-crafted jailbreak methods to further enhance its performance. This agent exemplifies advancements in red-teaming for AI security, aiming to rigorously test and improve model robustness.

In certain embodiments, a computer-implemented method for developing a training dataset according to the above may include the step of classifying an attack prompt into an evaluation class. If both the evaluation class of the response and the classification of the corresponding attack prompt are identified as violate classes, the method further includes generating manipulated attack prompts based on the original prompt using token manipulation techniques to ensure that the semantically equivalent manipulated prompt results in a permit class evaluation but still elicits a violate class response. This iterative process continues until such an instance is achieved.

"Token manipulation" can be defined as an intentional alteration or modification of individual elements within input prompts and responses by language models, typically represented by tokens. This process is employed to test the resilience of language models against potential vulnerabilities while seeking ways to enhance their security measures.

Token manipulation methods may include techniques such as input perturbations (e.g., altering words or phrases in a sentence), output reconstructions (altering token sequences within generated responses), and other forms of data modification that aim to evaluate the effectiveness of LLM guards, including predefined rules and evaluation mechanisms like Guardrails.

"Attack prompt" refers to a prompt intended to jailbreak a language model, in this case it is used to identify prompts that would jailbreak the first language model.

Preferably, in the above computer implemented method for generating training data for a protection model the classifying by the judging model comprises: receiving, by the judging model, for each of the attack prompts and at least one rule of rules of the use policy a judging prompt as input data, wherein the judging prompt comprises a statement requesting the judging model to evaluate whether the at least one rule of the rules of the use policy is violated by either the respective attack prompt or the corresponding response, each of the rules of the use policy corresponding to one of the violate classes, wherein the judging result gives a score according to which it can be determined whether or not the judging prompt violates the respective rule.

Preferably, the judging model generates the judgement result for the attack prompt and the response, and when the evaluation class of the response is the violate class and the evaluation class of the corresponding attack prompt is also the violate class the iteratively refining the attack prompt based on the judgement result comprises: generating, using the attack model, manipulated attack prompts based on the attack prompt using a token manipulation, such that the manipulated attack prompt is semantically equivalent to the attack prompt, until an evaluation class of the manipulated attack prompt is the permit class while the evaluation class of the response generated based on the manipulated attack prompt maintains to be the violate class.

Because the generating of the training data for the protection model is automated suitably, using the rules of the use policy, the training data can be suitably collected and the protection model can in turn be trained in a fast and efficient manner.

Another aspect according to the invention provides training data for use in the above method for training a protection model, wherein when the protection model is configured to execute the end-to-end mapping, the training data includes the reference prompts as input data and corresponding annotations, and when the protection model and the embedding model form the protection model in a stepped manner, the training data includes embedded reference prompts output by the embedding model as input data and the corresponding annotations.

Another aspect according to embodiments of the invention provides a computing apparatus including a a processor and a memory storing instructions that, when executed by the processor, configure the apparatus to perform one of the above methods.

Another aspect according to embodiments of the invention provides non-transitory computer-readable storage medium including instructions that, when processed by a computer, configure the computer to perform one of the above methods.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1A illustrates an aspect of the subject matter in accordance with one embodiment.
FIG. 1B illustrates an aspect of the subject matter in accordance with one embodiment.
FIG. 2 illustrates an aspect of the subject matter in accordance with one embodiment.
FIG. 3 illustrates an aspect of the subject matter in accordance with one embodiment.
FIG. 4 illustrates an aspect of the subject matter in accordance with one embodiment.
FIG. 5 illustrates an aspect of the subject matter in accordance with one embodiment.
FIG. 6 illustrates an aspect of the subject matter in accordance with one embodiment.
FIG. 7 illustrates a method 700 for preventing unsafe responses of a first language model, in accordance with one embodiment.
FIG. 8 illustrates an aspect of the subject matter in accordance with one embodiment.
FIG. 9 illustrates a method 900 for generating training data for a protection model, particular for use in the method of claim 11 or 12, in accordance with one embodiment.

### DETAILED DESCRIPTON OF DRAWINGS

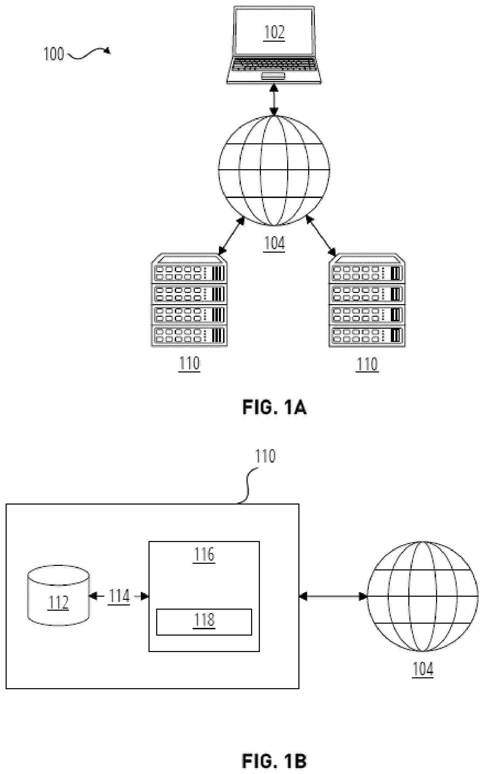

According to some embodiments of the pending invention a system 100 comprises a user device 102, a network 104 and one or a plurality of servers 110. A user may send a query from the user device 102 to the servers 110 that are connected by the network 104. The server 110 and the server 110 may be mirrors of one another, or different instances or may be a distributed system. It may comprise more than the two servers 110 shown in FIG. 1A.

The server 110 comprises at least a storage module 112 and a processing module 116. The processing module 116 and the storage module 112 are connected via communication channel 114, the communication channel 114 is a logical data connection between the individual modules. It may be a wired connection, a wireless connection, a connection via a bus system or any other link that allows communication between the storage module 112 and the processing module 116. The storage module 112 contains application data and processing data. The application data may be read from the storage module 112 by the processing module 116 via the communication channel 114 and the processing module 116 may in turn execute and application according to the application data read from the storage module 112. Furthermore the processing module 116 may read processing data from the storage module 112 that is processed in the respective application run on the processing module 116. Furthermore, the storage module 112 or the processing module 116 may receive queries from the user device 102 via the network 104.

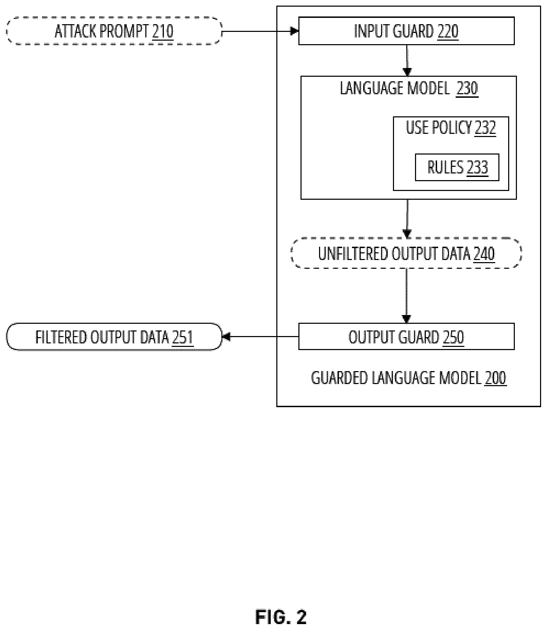

The servers 110 may run a language model 230. A user may input attack prompts 210 into the user device 102 directed to language model 230. According to an example, the language model 230 is implemented as a chat bot 118. The system 100 may be used with the prior art language model 230 as shown in FIG. 2, but it may also be used as part of the embodiments according to the invention.

According to the prior art, the application data may be such that the processing module 116 is configured to run a language model 230. The language model 230 may be a guarded language model 200 as shown in FIG. 2. The guarded language model 200 comprises an input guard 220, the language model 230, and an output guard 250. The language model 230 contains a use policy 232. The use policy 232 contains rules 233 that specify how the language model 230 shall be used and how not to be. A query received by the guarded language model 200 running on the processing module 116 comprises an attack prompt 210 directed to the language model 230. The input guard 220 receives the prompt and evaluates whether or not the attack prompt 210 violates the rules 233 of the use policy 232. If the input guard 220 classifies the input prompt as being in-line with the use policy 232, the input prompt is input into the language model 230. The language model 230 outputs an unfiltered output data 240 that is classified by an output guard 250, that checks whether or not the unfiltered output data 240 is in accordance with the rules 233 of the use policy 232. In case that the unfiltered output data 240 is in-line with the use policy 232, it is output as filtered output data 251. In case that the unfiltered output data 240 is classified as violating the use policy 232, it is not output by the output guard 250.

Accordingly, in the guarded language models 200 of the prior art, input data as well as output data needs to the classified by a suitable input guard 220 or output guard 250 and the language model 230 processes the input prompts even though the might result in abusive output data. Accordingly, processing with the guarded language model 200 always comprises that input prompts as well as output data are suitable classified by the input and output guard 220, 250.

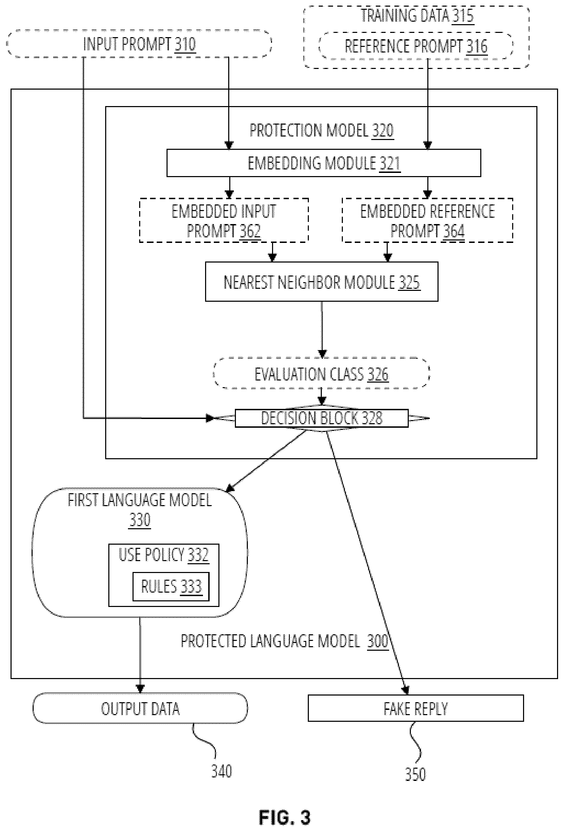

According to a first embodiment of the invention, a different protected language model 300 as shown in FIG. 3 is be provided. The protected language model 300 comprises a protection model 320 a decision block 328 and a first language model 330. The protection model 320 comprises an embedding module 321 and a nearest neighbor modules 325.

Input prompts 310 directed to the first language model 330 are input into the embedding module 321 of the protection model 320. The embedding module 321 is a multimodal embedding and computes an embedded input prompt 362 from the input prompt 310.

In addition, reference prompts 316 may be input into the embedding module 321, the embedding module 321 computes embedded reference prompts 364 from the reference prompts 316. Each reference prompt 316 is provided with an annotation, wherein the annotation corresponds to the evaluation class of the respective reference prompt 316. The nearest neighbor module 325 is configured to determine, for each input embedded input prompt 362 a nearest neighbor of the respective embedded input prompt 362 among the embedded reference prompts 364. For each of the input prompts 310 the evaluation class of the nearest neighbor is output by the nearest neighbor module 325 as the evaluation class 326 of the input prompt 310.

The evaluation class 326 is in turn input into the decision block 328 together with the input prompt 310. If the evaluation class 326 is of a permit class, the input prompt 310 is further forwarded to the first language model 330 and input into the first language model 330. If the evaluation class 326 is of the violate class, the decision block 328 outputs a fake reply 350.

According to the first embodiment, the evaluation classes may comprise a permit class and a number of violate classes. Each of the violate classes may correspond to one of the rules 333 of the use policy 332, i.e. the rule 333 that is violated by the input prompt 310 or reference prompt 316.

The first language model 330 is configured to compute from the received input prompt 310 output data 340 and output the output data 340. Referring back to FIG. 1A, the server 110 running the first language model 330 may in turn send the output data 340 to the user device 102 via the network 104. As the input prompt 310 is classified prior to being entered into the first language model 330, and because the evaluation class 326 is determined based on the reference prompts 316 any unsafe responses can be prevented and input prompts 310 that would lead to unsafe responses do not even need to be processed by the first language model 330 and compute resources may thus be spared and furthermore compute resources that would be required by the output guard 250 and time required to process the unfiltered output data 240 by the output guard 250 could also be spared, therefore, the protected language model 300 limits required compute resources and also speeds up the time that a user needs to wait for the response output by the first language model 330, as there is no output guard 250 required to filter the output data 340.

The plurality of reference prompts 316 is also called training data, or training data set. The embedding module 321 may embed the reference prompts 316 only once and save the embedded reference prompts 364 in the storage module 112 of the server 110 that the protection model 320 runs on. Accordingly, the embedding of each of the reference prompts 316 only needs to be computed once for a given embedding module 321 and the embedding of the input prompts 310 and the embedding of the reference prompts 316 may be computed independently from one another.

The embedded reference prompts 364 may be computed even before the protected language model 300 is deployed to users on the server 110. The embedding of the reference prompts 316 may thus also be regarded as a training phase of the protection model 320, because only after the embedded reference prompts 364 are computed, the nearest neighbor module 325 may compute the nearest neighbor of an input prompt received from the user devices 102. However, if the embedding module 321 is updated it might be necessary to also compute new embedded reference prompts 364 in accordance with the updated embedding module 321.

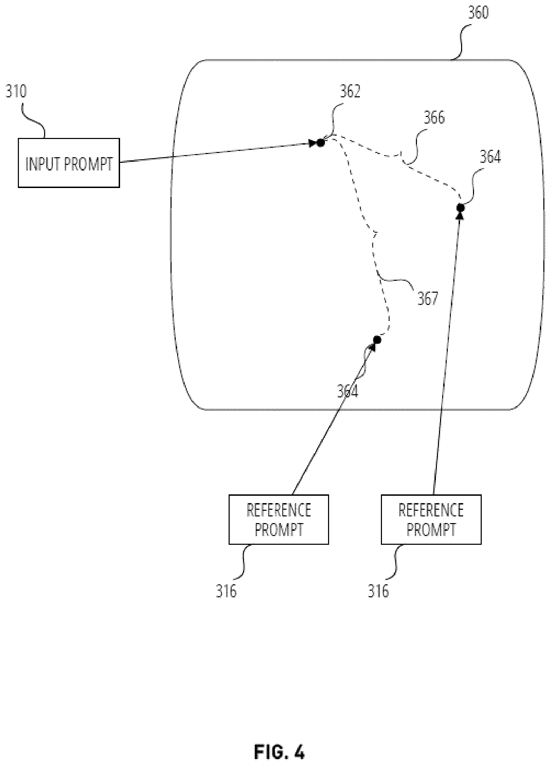

According to the first embodiment the embedding module 321 embeds input prompts 310 and reference prompts 316 into an embedding space 360. For each of the input prompts 310 the embedded input prompt 362 is determined. Furthermore, the embedding module 321 is configured to determine embedded reference prompts 364 from reference prompts 316. According to the first embodiment, for each violate class there is at least one reference prompt 316 that is embedded into the embedding space 360. For each embedded input prompt 362 a distance to each of the embedded reference prompts 364 is determined. FIG. 4 exemplarily shows that there are two embedded reference prompts 364, however, this is only limited to two for better understanding. There can be a plurality of embedded reference prompts 364 for each violate class.

As shown exemplarily, the nearest neighbor module 325 is configured to determine a first distance 366 and a second distance 367. The first distance 366 is smaller than the second distance 367, hence the annotation of the embedded input prompt 362 corresponding to the first distance 366 can be determined as the evaluation class 326 of the input prompt 310.

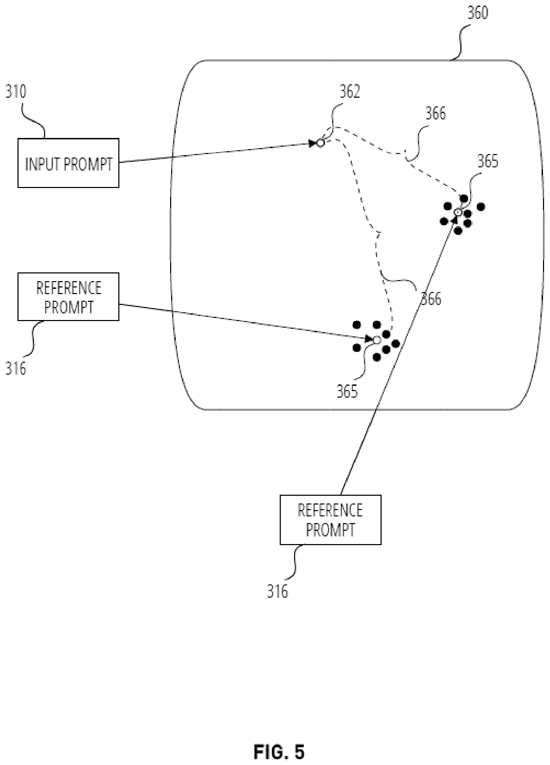

According to a modification of the first embodiment shown in FIG. 5, there are a plurality of embedded reference prompts 364 for each evaluation class. For all embedded reference prompts 364 of the same evaluation class, a median embedded reference prompt 365 is computed. The median embedded reference prompt 365 may be computed with any suitable median value determination algorithm, it might be an arythmetic median, a geometric, a quadratic or any other median value. Accordingly, in this modification, the nearest neighbor module 325 determines the nearest neighbor based on the median embedded reference prompt 365 and not on the individual embedded reference prompts 364.

In a preferable implementation, the reference prompts 316 comprise a plurality of reference prompts 316 for each of the rules 333 of the use policy 332, so that for each of the rules 333 there are reference prompts 316 that would result in an unsafe response by the first language model 330. As there are a plurality of reference prompts 316 for each of the rules 333, there can be at lease one median embedded reference prompt 365 for each of the rules 333. Furthermore, each of the rules 333 may correspond to one violate class of the evaluation classes 326.

According to a modification, the reference prompts 316 are grouped into semantically similar reference prompts 316, i.e. reference prompts 316 that are within a certain distance from one another in the embedding space 360 are grouped together and the median embedded reference prompt 365 is computed from these. Not all of the reference prompts 316 that correspond to the same evaluation class 326 need to be semantically similar and therefore need to be within the certain distance in the embedding space 360. Accordingly, there may be a plurality of grouped reference prompts 316 for each violate class.

According to an optional implementation, there may be the reference prompts 316 that result in an answer that do not violate the use policy 332 of the first language model 330 and can thus be identified as corresponding to a permit class. Again, if there is more than a single permit class, there might also be a plurality of reference prompts 316 for each of the permit classes and accordingly, the embedded reference prompts 364 of the each of the permit classes can in turn be grouped and a median embedded reference prompt 365 can be computed for each of the permit classes. If the nearest neighbor module 325 determines that the nearest neighbor is of the permit class, the user attack prompt 210 can in turn be input into the first language model 330.

According to a further implementation, the nearest neighbor module 325 is further configured to determine whether a distance of the embedded input prompt 362 to the nearest neighbor is smaller than a threshold distance. Exemplarily there might only be a few reference prompts 316 of the permit class in the reference prompts 316 and accordingly, space occupied by the embedded reference prompts 364 of the permit class is rather small compared to the overall size of the embedding space 360. Accordingly, it might be save to say that when a distance to the median embedded reference prompts 365 of the violate classes is bigger than the threshold distance, than the input prompt is semantically so far away from any input prompt 310 that might violate the use policy 332, that it is safe to say that the input prompt 310 is of the permit class.

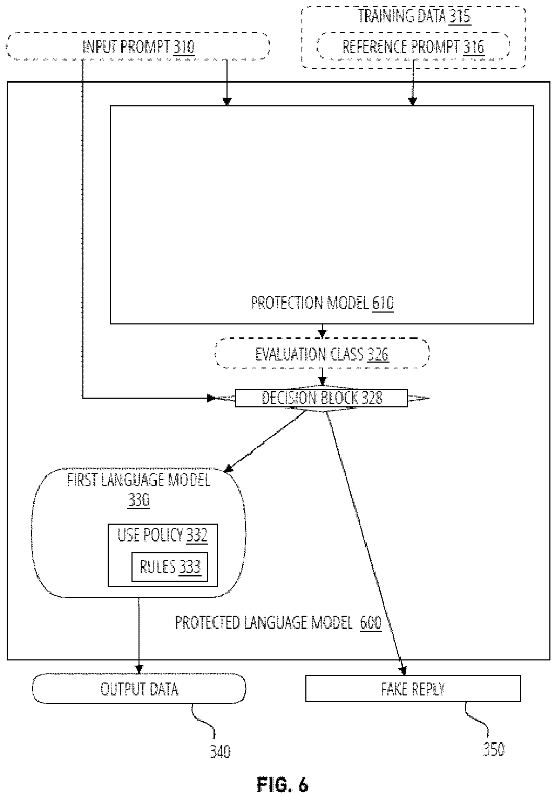

A second embodiment of the invention, schematically shown in FIG. 6, differs from the first embodiment in that instead of the protection model 320 that comprises the embedding module 321 and the nearest neighbor module 325, the protected language model 600 of the second embodiment comprises a protection model 610 that is a trained model, a so called machine learning model. The machine learning model is e.g. some kind of neural network, a support vector machine, a random forest or xgboost. The protection model 610 is implemented as a classifier that classifies the input prompt 310. Before the protection model 610 can be used to for classifivation of the input prompts 310 received from user devices 102, the protection model 610 needs to be trained, using training data. The training data comprises the reference prompts 316 and their corresponding annotations. Apart from that, the protected language model 600 works in accordance with the protected language model 300 of the first embodiment.

According to the second embodiment, during the training of the protection model 610, the protection model 610 learns to correctly identify input prompt 310 that would violate the use policy 332 of the first language model 330. During a training phase, reference prompts 316 are input into the protection model 610 and model parameters of the protection model 610 are adapted such that an evaluation class 326 output by the protection model 610 gives the correct evaluation class, i.e. the evaluation class corresponding to the annotation of the respective reference prompt 316. Such training phases are well known in the art, suitably objective functions need to be chosen and e.g. a gradient descent and backpropagation algorithm is used to suitably adapt the model parameters of the protection model 610.

According to an implementation of the second embodiment, the protection model 610 comprises the embedding module 321 as part of the machine learning model that makes up the protection model 610. During training, the model parameters of the embedding module 321 are not adapted, but only model parameters that relate to the classifying are suitably adapted.

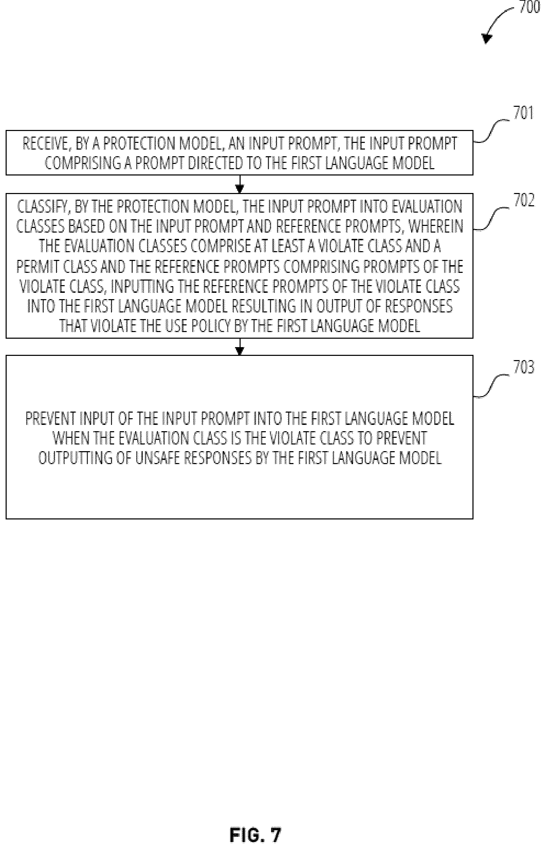

In the following, a method 700 for preventing unsafe responses by the first language model 330 according to a third embodiment is described with reference to FIG. 7. The method 700 may also named a method for preventing a violation of the use policy 332 of the first language model 330. These terms may be used interchangeably throughout this disclosure.

The first language model 330 according to the third embodiment may be a chat bot for customer care, that outputs its response in a streamed mode, as is standard practice for language models. A use policy 332 in such an application scenario may comprise rules that relate to the tasks of the customer care chat bot. The customer care chat bot may for example be limited to answer question that relate to the usage of a related product, or where there are certain contractual matters like a customer contract or the like, the chat bot may answer question concerning the customer contract. As an exemplary rule 333, the use policy 332 may limit the tasks that may be performed by the customer care chat bot such that the chat bot is not allowed to make legally binding offers to a customer.

In principle, the first language model 330 can be any language model and any application scenario that can be imagined for such language models. The use policy may be already used during training of the language model, but it may also be a use policy that is only applicable in the specific application scenario. For example, the first language model 330 may be used in a Retrieval-Augmented Generation (RAG)-based chatbot or could be applied in language-model based agents, that are able to plan, to reason and the execute action in a process consisting of multiple language model calls.

Further possible application scenarios may be, that the chat bot may be used as a support chat bot for internal use only. The use policy 332 in such an application scenario may guarantee that no abusive language is used or no abusive videos or pictures are generated by the first language model 330. The use policy 332 is respectively related to the application scenario of the first language model 330 and can be adapted suitably.

A further possible application scenario would be a chat bot for product support, so that a customer may ask how to handle products and get help on that. These would for example not allow any reponses that might damage the respective product, accordingly, the use policy 332 may comprise rules 333 of how not to use the respective product.

In a possible application scenario, the first language model 330 may be limited to only answering questions that relate to a specific field of information (in this case products of a company that runs the first language model 330). If the questions deviate from this limited purpose, the use policy is broken and the first language model 330 will output a default prompt that will state that it is not able to provide that information as it is limited to a certain purpose.

In a step 701, the method 700 comprises receiving, by the protection model 320, an input prompt 310, the input prompt 310 comprising a prompt directed to the first language model 330. According to the application scenario of the first language model 330 the input prompt 310 relates to a customer care question that a customer may ask the customer care chat bot. As already said above, all the input prompts 310 received may relate to different aspects of products the customer needs support with, it may also relate to specific contract details of a customer, however, one of the rules 333 may prohibit that the customer care chat bot makes any legally binding offers to the customer seeking advice.

Step 702 comprises classifying, by the protection model 320, the input prompt 310 into an evaluation class 326 based on the input prompt 310 and reference prompts 316, wherein evaluation classes 326 comprise at least a violate class and a permit class and the reference prompts 316 comprising prompts of the violate class, inputting the reference prompts 316 of the violate class into the first language model 330 resulting in output of output data 340 that violate the use policy 332 of the first language model.

When again applying the exemplary application scenario the reference prompts 316 of the violate class hence contain reference prompts 316 that would, if input into the first language model 330, result in response by the first language model 330 that would constitute an offer and thus should be prevented from being input in the first language model 330.

According to the third embodiment, the protection model 320 may be the protection model 320 of the first embodiment or the protection model 610 of the second embodiment. Accordingly, the evaluation class 326 is either computed using the trained protection model 610 or the embedding module 321 and the nearest neighbor module 325 are used to determine the evaluation class.

In step 703, the method 700 prevents input of the input prompt into the first language model 330 when the evaluation class 326 is the violate class to thus prevent outputting of unsafe responses by the first language model 330. The preventing of outputting of unsafe responses is characterized in that the training data comprises at least one reference prompt that when input into the first language model generates a response that violates a use policy of the first language model, wherein the use policy comprises rules that define how the first language model is not to be used.

Applying the above application scenario again, the input prompt 310 that would result in a response by the first language model 330 that constitutes an offer would be prevented from being input into the first language model 330 and in turn a fake reply 350 would be output.

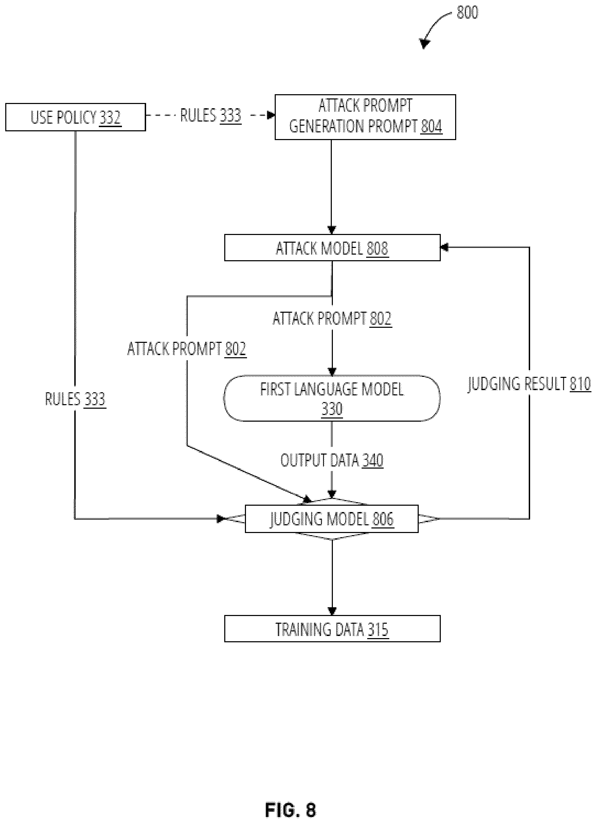

FIG. 8 shows a system 800 according to a fourth embodiment that is configured to generate training data 315. The system comprises an attack model 808, the first language model 330, including the use policy 332 of the first language model 330, and a judging model 806.

The attack model 808 is a language model that is specifically used for helping in jailbreaking attacks. Such language models are discussed in the prior art references cited above with reference to adverserial attacks. The attack model 808 receives, an attack prompt generation prompt 804. The attack prompt generation prompt 804 comprises the rule 333 of the use policy 332 that specifies that the chat bot 118, for which the training data 315 is to be generated, is not allowed to generate responses that would constitute legally binding offers together with a text prompt such as "Try to generate an attack prompt 802 directed to the first language model 330 that is would break the rule 333 of the first language model 330". The attack model 808 processes the attack prompt generation prompt 804. In turn, the attack model 808 generates the attack prompt 802 that is input into the first language model 330.

The judging model 806 is another language model, such as the input guard 220 or the output guard 250 known from the prior art, that receives the output data 340 from the first language model 330, that is the response generated by the first language model 330 in response to receiving the attack prompt 802, the attack prompt 802 and the respective rule 333. In turn a judging prompt is formed, either from the output data 340 and the rule 333 or the attack prompt 802 and the rule 333 and in addition with a text prompt requesting the judging model to give out a judging result 810 that evaluates whether or not the judging prompt violates the rule 333 and in turn evaluates whether or not the rule 333 is violated. In addition, the judging model 806 may also evaluate the attack prompt 802 with respect to the rule 333. The judging model outputs a judging result 810 that, if the judging model 806 evaluates that the output data 340 does not violate the rule 333, is handed back to the attack model 808 together with the original attack prompt 802. In turn, the attack model 808 refines the attack prompt iteratively, to generate a new attack prompt 802 that is again fed to the first language model 330. Further examples of judging models 806 are also described in the prior art cited above with reference to adverserial attacks.

If the judging result 810 by the judging model 806 is such that from the judging result 810 it follows that the output data 340 violates the rule 333, the attack prompt 802 is selected as training data 315 and an annotation corresponding to the evaluation class 326, i.e. the violate class of the rule 333, is saved in the training data 315 together with the attack prompt 802 as a reference prompt 316 of the violate class.

According to a modification, the judging result 810 may be a score, for example a normed score that gives a probability that the evaluated judging prompt violates the respective rule 333.

According to a further modification, the attack prompt 802 and the corresponding output data 340 are both evaluated as belonging to the violate class. In such a case, further finetuning of the attack prompt is done, as it is an aim of the pending invention to also identify attack prompts 802 that would not be identified by the input guard 220 but only by the output guard 250. Accordingly, in such cases, the attack prompt 802 may be further manipulated using e.g. token manipulation iteratively, until a judging result 810 of the attack prompt 802 does no longer indicate a violation of the use policy 332 and while the evaluation of the output data 340 still violates the use policy.

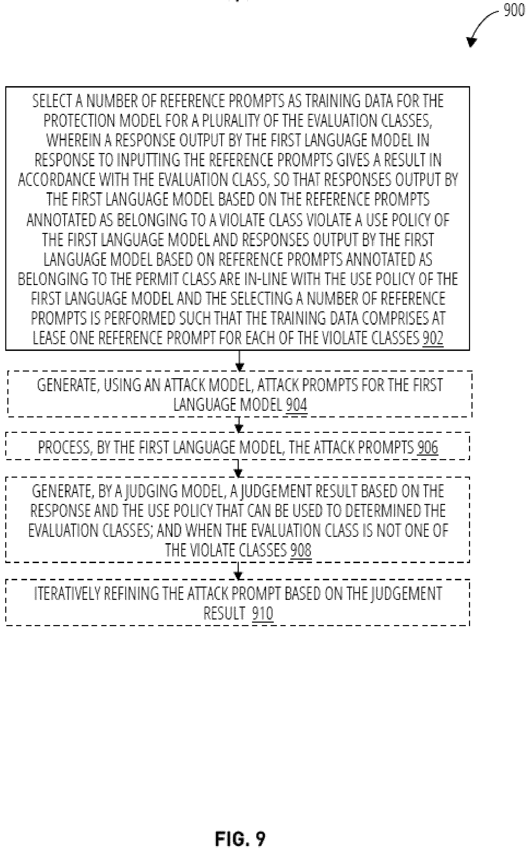

In the following a method 900 for generating training data 315 for the protection model 320, 610 according to a fifth embodiment, shown in FIG. 9, is discussed that might run on the system 800 according to the fourth embodiment. The method 900 is described in the context of the above exemplary application scenario of a chat bot for customer care, however, this is only exemplary, and any other application scenario of a language model with a use policy can suitably be applied, as long as a use policy 332 is available.

In step 902, the method 900 selects a number of reference prompts 316 as training data for the protection model 320 for a plurality of the evaluation classes 326, wherein a response output by the first language model 330 in response to inputting the reference prompts 316 gives a result in accordance with the evaluation class 326, so that responses output by the first language model 330 based on the reference prompts annotated as belonging to a violate class violate a use policy 332 of the first language model 330 and responses output by the first language model 330 based on reference prompts 316 annotated as belonging to the permit class are in-line with the use policy of the first language model.

The selecting a number of reference prompts 316 is performed such that the training data 315 comprises at least one reference prompt 316 for each of the violate classes. Coming back to the example of the chat bot 118 that is implement for customer support and that according to the use policy 332 shall not provide any legally binding offers such as new contracts to a customer, the reference prompts 316 need to be selected such that they generate outputs that violate the rule 333 and thus provide an offer to the customer, e.g. a new contract or an updated contract or the like.

In step 904, the method 900 generates, using the attack model 808, attack prompts 802 for the first language model 330.

In step 906, method 900 processes, by the first language model 330, the attack prompts 802.

In step 908, method 900 generates, by a judging model 806, a judgement judging result 810 based on the response and the use policy 332 that can be used to determined the evaluation classes 326; and when the evaluation class 326 is not one of the violate classes the method 900 in step 910, iteratively refines the attack prompt 802 based on the judgement judging result 810.

As the method 900 according to the fifth embodiment can generate for any use policy 332 in which rules 333 are written down that define how the first language model 330 may be used and how not, first language models 330 may be protected from misuse easily by automatically generating the training data 315 as described with reference to FIG. 9.

According to a sixth embodiment in another method for generating training data the first language model 330 is operated in a test mode, in which input and output guards 220, 250 are provided, reference prompts 316 are collected into the training data 315 when the use policy 332 is violated and when an amount of reference prompts 316 in the training data 315 is sufficient for training the protection model 320, 610 the test mode is ended and the first language model 330 is operated in accordance with the first and second embodiments.

According to a seventh embodiment, training data 315 is provided that was generated in accordance with the method according to the fifth or the sixth embodiment.

According to an eighth embodiment a computer apparatus is provided including a processor and a memory storing instructions that, when executed by the processor, configure the apparatus to perform the methods according to the above described methods.

According to a ninth embodiment, a non-transitory computer-readable storage medium is provided that includes instructions that, when processed by a computer, configure the computer to perform the above described methods.

**LISTING OF DRAWING ELEMENTS**

| | | | |
|---|---|---|---|
| 100 | system | 365 | median embedded reference prompt |
| 102 | user device | | |
| 104 | network | 366 | first distance |
| 110 | server | 367 | second distance |
| 112 | storage module | 600 | protected language model |
| 114 | communication channel | 610 | protection model |
| 116 | processing module | 700 | method |
| 118 | chat bot | 701 | step |
| 200 | guarded language model | 702 | step |
| 210 | attack prompt | 703 | step |
| 220 | input guard | 800 | system |
| 230 | language model | 802 | attack prompt |
| 232 | use policy | 804 | attack prompt generation prompt |
| 233 | rules | | |
| 240 | unfiltered output data | 806 | judging model |
| 250 | output guard | 808 | attack model |
| 251 | filtered output data | 810 | judging result |
| 300 | protected language model | 900 | method |
| 310 | input prompt | 902 | step |
| 315 | training data | 904 | step |
| 316 | reference prompt | 906 | step |
| 320 | protection model | 908 | step |
| 321 | embedding module | 910 | step |
| 325 | nearest neighbor module | | |
| 326 | evaluation class | | |
| 328 | decision block | | |
| 330 | first language model | | |
| 332 | use policy | | |
| 333 | rules | | |
| 340 | output data | | |
| 350 | fake reply | | |
| 360 | embedding space | | |
| 362 | embedded input prompt | | |
| 364 | embedded reference prompt | | |

## Claims

1. Computer implemented method for preventing unsafe responses of a first language model, comprising:
receiving, by a protection model, an input prompt, the input prompt comprising a prompt directed to the first language model,
classifying, by the protection model, the input prompt into an evaluation class based on the input prompt and training data, wherein evaluation classes comprise at least a violate class and a permit class and the training data comprising reference prompts of the violate class, wherein inputting the reference prompts of the violate class into the first language model would result in output of responses that violate the use policy by the first language model,
preventing input of the input prompt into the first language model when the evaluation class is the violate class to prevent outputting of unsafe responses by the first language model, **characterized in that** the training data comprise at least one reference prompt that when input into the first language model generates a response that violates a use policy of the first language model, wherein the use policy comprises rules that define how the first language model is not to be used.

2. The method of claim 1, wherein there are a plurality of violate classes and the training data comprise at least one reference prompt for each of the violate classes.

3. The method of claim 2 wherein the classifying the input prompt comprises:
embedding the input prompt and the reference prompts to generate an embedded input prompt and embedded reference prompts,
determining a nearest neighbor of the embedded input prompt among the embedded reference prompts, and
when the nearest neighbor is an embedded prompt of the violate class and a distance between the nearest neighbor and the embedded input prompt is smaller than a threshold distance, the evaluation class is the violate class.

4. The method of claim 3 wherein the determining a nearest neighbor comprises grouping the embedded reference prompts into one or more violate classes, determining an average embedding value for the embedded reference prompts of each violate class and determining the nearest neighbor based on the determined average embedding values.

5. The method of any one of claims 1 to 4 wherein the training data further comprises reference prompts that when input into the first language model generate a response that is in line with the use policy of the first language model and are classified as reference prompts of the permit class and when the nearest neighbor of the embedded input prompt is an embedded reference prompt of the permit class or when a nearest neighbor is a reference prompt of the violate class and the distance to the nearest neighbor is larger than the threshold distance, the evaluation class is the permit class.

6. The method of any one of claims 2 to 5 wherein the determining a nearest neighbor comprises at least one of:
- performing a principal component analysis,
- performing an approximate nearest neighbor search,
- performing a cluster analysis,
- performing a singular value decomposition, and
- performing a hierarchical navigable small world analysis,
and the determining a distance between the nearest neighbor and the input prompt comprises at least one of:
- applying a cosine distance metric,
- applying a Euclidian distance metric,
- applying an L2 distance.

7. The method of any one of claims 1 to 6 wherein the embedding the input prompt comprises at least one of embedding the input prompt using at least any one of:
- a TF-IDF vectorization,
- a word embedding,
- a sentence embedding,
- a first language model-based sentence embedding
- audio embedding,
- image embedding,
- video embedding, or
- a multimodal embedding.

8. A protection model for use in the method for prefenting unsafe responses by a first language model according to any one of claims 1 to 7, wherein the protection model is configured to receive input data and generate output data, wherein the input data is the input prompt directed to the first language model and the output data corresponds to the evaluation class determined by the protection model.

9. The protection model of claim 8, wherein the protection model either comprises an embedding module to compute the embedding, and a mapping executed by the protection model is an end-to-end mapping and the protection model is configured to take prompts as input data and output the evaluation class as the output data; or the protection model is a combination of the embedding module and a nearest neighbor module, so that the protection model performs the classifying in stepped manner, the embedding module is configure to receive the input prompts and reference prompts as input data, embed the received prompts and output embedded prompts as output data, and the nearest neighbor module configured to compute the evaluation class from the embedded input prompts and the embedded reference prompts by determining the neareast neighbor.

10. The protection model of claim 8 or 9 wherein the embedding module comprises at least one of a TF-IDF vectorization, a word embedding, a sentence embedding, a language model-based sentence embedding, audio embedding, image embedding, video embedding, a multimodal embedding.

11. A computer implemented method for training the protection model of any one of claims 8 to 10 comprising:
receiving training data as input data, wherein the training data is based on the reference prompts and comprises, for each reference prompt, a corresponding annotation that indicate the evaluation class of the respective reference prompt,
optimizing the protection model to output a result in accordance with the annotation.

12. The method for training the protection model of claim 11, wherein when the protection model is configured to execute the end-to-end mapping, the training data comprises the reference prompts and when the protection model and the embedding module form the protection model in a stepped manner, the training data may comprise embedded reference prompts output by the embedding module as input data for the nearest neighbor module or the training data comprises the reference prompts and the reference prompts need to be processed by the embedding module before training the nearest neighbor module.

13. A computer implemented method for generating training data for a protection model, particular for use in the method of claim 11 or 12, comprising:
selecting a number of reference prompts as training data for the protection model for a plurality of the evaluation classes, wherein a response output by the first language model in response to inputting the reference prompts gives a result in accordance with the evaluation class, so that responses output by the first language model based on the reference prompts annotated as belonging to a violate class violate a use policy of the first language model and responses output by the first language model based on reference prompts annotated as belonging to the permit class are in-line with the use policy of the first language model and the selecting a number of reference prompts is performed such that the training data comprises at lease one reference prompt for each of the violate classes.

14. The method of claim 13, wherein the selecting a number of reference prompts comprises:
running the first language model in a test mode, wherein input prompts directly input into the first language model,
receiving, by the first language model, input prompts,
classifying, using a classifier, the responses as at least one of the violate class and the permit class,
selecting the input prompts corresponding to responses classified as the violate class as the reference prompts of the violate class and selecting the input prompts corresponding to responses classified as the permit class as reference prompts of the permit class, and
collecting the selected input prompts as basis for the training data.

15. The method of claim 13, wherein the selecting a number of reference prompts comprises:
generating, using an attack model, attack prompts for the first language model;
processing, by the first language model, the attack prompts;
generating, by a judging model, a judgement result based on the response and the use policy that can be used to determined the evaluation classes; and when the evaluation class is not one of the violate classes:
iteratively refining the attack prompt based on the judgement result.

16. The method of claim 15, wherein the classifying by the judging model comprises:
receiving, by the judging model, for each of the attack prompts and at least one rule of rules of the use policy a judging prompt as input data, wherein the judging prompt comprises a statement requesting the judging model to evaluate whether the at least one rule of the rules of the use policy is violated by either the respective attack prompt or the corresponding response, each of the rules of the use policy corresponding to one of the violate classes, wherein the judging result gives a score according to which it can be determined whether or not the judging prompt violates the respective rule.

17. The method of claim 16, wherein the judging model generates the judgement result for the attack prompt and the response, and when the evaluation class of the response is the violate class and the evaluation class of the corresponding attack prompt is also the violate class the iteratively refining the attack prompt based on the judgement result comprises:
generating, using the attack model, manipulated attack prompts based on the attack prompt using a token manipulation, such that the manipulated attack prompt is semantically equivalent to the attack prompt, until an evaluation class of the manipulated attack prompt is the permit class while the evaluation class of the response generated based on the manipulated attack prompt maintains to be the violate class.

18. Training data for use in the method of claim 11 or 12, and when the protection model is configured to execute the end-to-end mapping, the training data comprises the reference prompts as input data and corresponding annotations, and when the protection model and the embedding model form the protection model in a stepped manner, the training data comprises embedded reference prompts output by the embedding model as input data and the corresponding annotations.

19. A computing apparatus including a processor and a memory storing instructions that, when executed by the processor, configure the apparatus to perform the method of any one of claims 1-7 or 11-17.

20. A non-transitory computer-readable storage medium including instructions that, when processed by a computer, configure the computer to perform the method of any one of claims 1-7 or 11-17.
